Europäisches Patentamt

(19) European Patent Office

Office européen des brevets

(11) Publication number: **0 249 261**
**B1**

(12) # EUROPEAN PATENT SPECIFICATION

(45) Date of publication of the patent specification:
31.10.90

(21) Application number: **87200884.2**

(22) Date of filing: **13.05.87**

(51) Int. Cl.⁵: **D04H 1/00, D04H 1/54**

(54) Shaped article made of carrier fibres and thermoplastic binder fibres, and method of manufacturing It.

(30) Priority: **14.05.86 NL 8601217**

(43) Date of publication of application:
**16.12.87 Bulletin 87/51**

(45) Publication of the grant of the patent:
**31.10.90 Bulletin 90/44**

(84) Designated Contracting States:
**BE CH DE FR GB IT LI NL SE**

(56) References cited:
**DE-A- 3 121 277**
**FR-A- 2 445 103**
**GB-A- 2 096 195**
**US-A- 2 145 899**
**US-A- 2 609 539**

(73) Proprietor: **ISOVER SAINT-GOBAIN, 18, avenue d'Alsace, F-92400 Courbevoie(FR)**

(72) Inventor: **Kalbskopf, Reinhard E., Birkenweg 434, CH-4803 Vordemwald(CH)**

(74) Representative: **Smulders, Theodorus A.H.J., Ir. et al, Vereenigde Octrooibureaux Nieuwe Parklaan 107, NL-2587 BP 's-Gravenhage(NL)**

ACTORUM AG

## Description

This invention relates to a shaped article made of a mixture comprising a major content of carrier fibres that are not capable of being shaped by pressure or heat and a minor content of binding fibres of a thermoplastic synthetic material, the binding fibres being stuck to the carrier fibres

A similar shaped article is disclosed in GB-A 2 096 195. This known article is specifically designed for insulation purposes and is unsuitable, for example, for use as a carrier or matrix for growing plants.

A further drawback is that the article generally has the form of a slab or sheet. If, for example, a specific shape is desired, the slab or sheet will first be molten and subsequently the melt will be cast into the desired shape. This is a cumbersome and time-consuming procedure.

The object of the invention is to provide a shaped article, such as cylinders and blocks, of the type specified in the opening paragraph, which is suitable in itself as a carrier or matrix for containing and germinating therein a grain of seed and for further growing the embryo for sometime or transplanting the grown sprout, said shaped article being appropriate for immediate manufacture in the desired form enabling the selection from a plurality of binders, as well as a method of making the shaped article.

According to the invention there is provided a shaped article characterized in that the shaped article is made of a mixture comprising the carrier fibres in the form of an incoherent nodulated fiber material or fiber bundles having a diameter of 2-10 mm, and the binding fibres having a length of 5-25 mm and a diameter of 10-30 microns, the bulk density of the shaped article being 0.08-0.30 g/cm³.

The carrier fibres available in the shaped article according to the invention in a major content may be selected from natural organic fibres, e.g., coco fibres, sisal fibres or peat, or from mineral fiber material, e.g., rock wool.

As the binding fibres are used according to the invention in the form of solid particles, namely in the form of short fibres of a thermoplastic synthetic material, and not in liquid form, a shaping treatment is rendered possible to obtain a shaped article with no special drying being required afterwards. Providing the binding fibres as short fibres is conducive to the formation of a porous spatial network structure with retention of strength and cohesion.

With a view to using the shaped article as a carrier or matrix for germinating grains of seed and growing plants therein, a thermoplastic synthetic material will be selected for manufacturing the solid binder, said thermoplastic synthetic material being absolutely harmless from environmental considerations, in particular from the viewpoint of food chemistry. In addition to the fact that the fibrous solid binder of the selected thermoplastics synthetic material must give sufficient mechanical strength and porosity to the shaped articles obtained therewith, the material should also be entirely resistant to the effect of the food with which the vegetable material is grown, at least for the period until the root system has developed completely and the sprout has been transplanted along with the matrix.

As far as the selection of the thermoplastic synthetic material from which the fibrous binder has been manufactured is concerned, a material will be preferred with which a smooth, uncomplicated shaping treatment is possible, that is to say the bonding process proceeds rapidly, and the shaped article has sufficient mechanical strength immediately after its being formed so as to be handled without damage. In this connection a thermoplastic synthetic material is advantageously selected which combines a low glass transition temperature of 30-180°C, preferably lower than about 70°C, with good bonding properties.

The desired properties as enumerated above are completely met by fibres made of a copolymer comprising 80-90% vinyl chloride and 10-20% vinyl acetate. Such fibres are physiologically harmless and are resistant to water and many acids, bases and solvents. The melting behaviour is then such that with a continuously decreasing viscosity the fibres begin to stick above the glass transition temperature and are deformed more and more easily until the fiber structure completely disappears above the melting point.

The invention also relates to a method of manufacturing a shaped article according to the invention, which comprises preparing a mixture having a major content of carrier fibres that are not capable of being formed by means of pressure or heat and a minor content of binding fibres of a thermoplastic synthetic material, and then subjecting the mixture in dry form to a shaping treatment using heat and/or pressure, and which process is characterized in that an incoherent mixture having a bulk density of 0.05-0.15 g/cm³ is prepared from loose agglomerates of the carrier fibres said agglomerates having a diameter of 2-10 mm, and the incoherent binding fibres made of a thermoplastic synthetic material having a fiber length of 5-25 mm and a diameter of 10-30 microns, which mixture is then subjected to a shaping treatment by casting the dry mixture into a mould, vibrating it and heating it, to a temperature above the glass transition temperature of the thermoplastic synthetic material, and using a light pressure that does not lead to a bulk density of the shaped article of more than 0.08-0.30 g/cm³, after which the mixture is cooled to a temperature below the glass transition temperature and the shaped article is removed from the mould.

As regards the solid binder of the thermoplastic synthetic material, fibres are used having a length of 5-25 mm and a diameter of 10-30 microns.

An optimum mixing is obtained if the two fiber components are processed to an aqueous suspension having a solid content of about 2-10%. Of course, for further processing the same the mixture recovered from the suspension should first be subjected to a drying process. This additional treatment means a complication which may be prohibitive from an economical viewpoint.

In the manufacutre of the shaped articles according to the invention good results are also obtained if the two fiber components are mixed in dry condition in a slowly rotating mixer, e.g., in a concrete mixer.

It is possible within the framework of dry mixing of the fiber components first to wet the binding fibres made of the thermoplastic synthetic material with water in an amount of 10-15%. If it is wished to affect the hydrophilic character of the ready shaped article, a wetting agent to be used for this purpose may be added during this wetting stage.

In the case of dry mixing mineral wool is used as the carrier fiber material provided in the mixture in major content, said carrier fiber material being in the form of wool particules nodulated to obtain a proper mixing with thermoplastic binder fibres. Such nodulated mineral wool particles are commercially sold, e.g., in the form of rock wool grains. The diameter chosen for the mineral wool particles is preferably 2-10 mm. The thermoplastic fibres then serve as binder between such nodulated wool particles. A content of thermoplastic fibres of 2-20 wt.% is then sufficient to form an adequately strong spatial network, the nodulated wool particles being surrounded by the thermoplastic fibres which are interconnected. The spatial skeletal structure as a result of the interconnected thermoplastic fibres and the fact that nodulated wool particles are bonded by means of fibrous thermoplastic material prove to give the final shaped article its strength.

If the starting materials are nodulated mineral wool as carrier fibres and binding fibres made of the copolymer vinyl chloride/vinyl acetate as the solid binder, the mixture prepared from these fiber components can be further processed by heating it with, e.g., hot air, or also by high-frequency heating, and bringing it to a temperature above about 80-100°C, said temperature being above the glass transition temperature of the copolymer, but clearly below its melting point, namely 160°C. At this temperature the binding fibres develop a proper stickiness without losing the fiber structure. A proper bond between the components of the mixture is already obtained by keeping the polymer fibres at said temperature of 80-100°C for a short time for 0.5-1 min. The mixture is then brought into the contemplated form by pressing and fixing it in this form by cooling, e.g., by blowing cold air, to below the glass transition temperature. The resulting shaped article can be removed from the mould and is easy to handle for further processing.

In addition to selecting a thermoplastic synthetic material for preparing the binder fibres which shows a uniform melting behavior, such as the vinyl chloride/vinyl acetate copolymer, there may also be selected a synthetic material having a much more abrupt melting process. An example of this is polyethylene, which has the advantage of being cheap. The abrupt course of the melting process, however, impedes the ease of handling of the binder fibres. Another example is polypropylene.

The method according to the invention is easily carried out with relatively simple means. For this reason it can also be used by small consumers, e.g., in the developing countries.

## Claims

1. A shaped article made of a mixture comprising a major content of carrier fibres that are not capable of being shaped by pressure or heat, and a minor content of binding fibres of a thermoplastic synthetic material, the binding fibres being stuck to the carrier fibres, characterized in that the shaped article is made of a mixture comprising the carrier fibres in the form of an incoherent nodulated fiber material or fiber bundles having a diameter of 2-10 mm, and the binding fibres having a length of 5-25 mm and a diameter of 10-30 microns, the bulk density of the shaped article being 0.08-0.30 g/cm³.

2. A shaped article according to claim 1, characterized in that the binding fibres are made of a thermoplastic synthetic material having a glass transition temperature of 30-180°C.

3. A shaped article according to claim 2, characterized in that the glass transition temperature of the thermoplastic synthetic material is less than about 70°C.

4. A shaped article according to claim 3, characterized in that the thermoplastic synthetic material is a copolymer of about 80-90% vinyl chloride and 10-20% vinyl acetate.

5. A method of manufacturing a shaped article according to claims 1-4, which comprises preparing a mixture having a major content of carrier fibres that are not capable of being formed by pressure or heat, and a minor content of binding fibres of a thermoplastic synthetic material, and then subjecting the mixture in dry form to a shaping treatment using heat and/or pressure, characterized in that an incoherent mixture having a bulk density of 0.05-0.15 g/cm³ is prepared from loose agglomerates of the carrier fibres, said agglomerates having a diameter of 2-10 mm, and the incoherent binding fibres made of a thermoplastic synthetic material having a fiber length of 5-25 mm and a diameter of 10-30 microns, which mixture is then subjected to the shaping treatment by casting the dry mixture into a mould, vibrating it, and heating it to a temperature above the glass transition temperature of the thermoplastic synthetic material, and using a light pressure that does not lead to a bulk density of the shaped article of more than 0.08-0.30 g/cm³, after which the mixture is cooled to a temperature below the glass transition temperature and the shaped article is removed from the mould.

6. A method according to claim 5, characterized in that the thermoplastic synthetic material has a glass transition temperature of about 70°C.

7. A method according to claim 6, characterized in that the thermoplastic synthetic material is a copolymer of 80-90% vinyl chloride and 10-20% vinyl acetate.

8. A method according to claims 5-7, characterized in that said mixture is prepared by processing the two fiber components to an aqueous suspension having a solids content of 2-10%, and that after recovery from the suspension the mixture is first dried for further processing.

9. A method according to claims 5-6, characterized in that the two fiber components are mixed in dry condition in a slowly rotating mixture, using mineral wool in nodulated form as the carrier fiber material.

10. A method according to claim 9, characterized in that prior to mixing the binding fibres of the thermoplastic synthetic material are wetted with water in an amount of 10-15 wt.%, if required in combination with a wetting agent.

11. A method according to claims 5-7, characterized in that when fibres of the vinyl chloride/vinyl acetate copolymer are used in the mixture as binding fibres, said fibres are maintained at a temperature of 80-100°C for 0.5-1 min., which mixture is then shaped in a mould by applying a light pressure and cooled, and the shaped article is removed from the mould.

## Revendications

1. Article mis en forme fait d'un mélange comportant, en majeure partie, des fibres support qui ne peuvent pas être mises en forme par pression ou de manière thermique et, en moindre quantité, des fibres de liant faites en matière synthétique thermoplastique, les fibres de liant étant collées aux fibres support, caractérisées en ce que l'article mis en forme est fait d'un mélange comprenant les fibres de support sous la forme d'une matière fibreuse nodulée incohérente ou de touffes de fibres ayant un diamètre de 2–10 mm, et de fibres ayant une longueur de 5–25 mm et un diamètre de 10-30 microns, la masse volumique en vrac de l'article mis en forme étant de 0,08–0,30 g/cm³.

2. Article mis en forme selon la revendication 1, caractérisé en ce que les fibres de liant sont faites en matière synthétique thermoplastique ayant une température de transition vitreuse de 30–180°C.

3. Article mis en forme selon la revendication 2, caractérisé en ce que la température de transition vitreuse de la matière synthétique thermoplastique est inférieure à 70°C environ.

4. Article mis en forme selon la revendication 3, caractérisé en ce que la matière synthétique thermoplastique est un copolymère composé d'environ 80–90% de chlorure de vinyle et de 10–20% d'acétate de vinyle.

5. Méthode de fabrication d'un article mis en forme selon les revendications 1 à 4 qui comporte la préparation d'un mélange ayant, en majeure partie, des fibres support qui ne peuvent être mises en forme par pression ou chaleur et, en moindre quantité, des fibres de liant en matière synthétique thermoplastique et ensuite par la soumission du mélange à sec à un traitement de mise en forme faisant appel à la chaleur et/ou à la pression, caractérisée en ce qu'un mélange incohérent ayant une masse volumique en vrac de 0,05–0,15 g/cm est préparé à partir d'agglomérats lâches de fibres support, lesdits agglomérats ayant un diamètre de 2–10 mm, et les fibres de liant incohérentes en matière synthétique thermoplastique ayant des fibres de 5–25 mm de long et 10–30 microns de diamètre, ledit mélange étant ensuite soumis à un traitement de mise en forme en moulant le mélange sec dans un moule, en le soumettant à des vibrations et en le chauffant à une température supérieure à la température de transition vitreuse de la matière synthétique thermoplastique et en utilisant une pression légère avec laquelle la masse volumique en vrac de l'article mis en forme ne dépasse pas 0,08–0,30 g/cm³, le mélange est ensuite refroidi à une température inférieure à la température de transition vitreuse et l'article mis en forme est retiré du moule.

6. Méthode selon la revendication 5, caractérisée en ce que la matière synthétique thermoplastique a une température de transition vitreuse de 70°C environ.

7. Méthode selon la revendication 6, caractérisée en ce que la matière synthétique thermoplastique est un copolymère de chlorure de vinyle pour 80–90% et de l'acétate de vinyle pour 10–20%.

8. Méthode selon les revendications 5 à 7, caractérisée en ce que le mélange est préparé par le traitement de deux composants fibreux dans une suspension aqueuse ayant une teneur en solides de 2–10% et, qu'après la récupération de la suspension, le mélange est tout d'abord séché avant d'être soumis à un traitement ultérieur.

9. Méthode selon les revendications 5 et 6, caractérisée en ce que les deux composants fibreux sont mélangés à l'état sec dans un malaxeur à rotation lente, en utilisant de la laine minérale sous forme nodulée en tant que fibre de support.

10. Méthode selon la revendication 9, caractérisée en ce qu'avant le mélange des fibres de liant en matière synthétique thermoplastique, ces dernières sont mouillées avec de l'eau à raison de 10–15 en pourcentage de poids, si nécessaire, en combinaison avec un agent humidificateur.

11. Méthode selon les revendications 5 à 7, caractérisée en ce que lorsque les fibres de copolymère de chlorure de vinyle/acétate de vinyle sont utilisées dans le mélange à titre de fibres de liant, lesdites fibres sont maintenues à une température de 80–100°C pendant 0,5–1 minute, ledit mélange étant ensuite mis en forme dans un moule en appliquant une légère pression et étant refroidi, l'article mise en forme étant ensuite retiré du moule.

## Patentansprüche

1. Formteil, hergestellt aus einer Mischung mit einem hauptsächlichen Gehalt an Trägerfasern, die nicht durch Druck oder Wärme geformt werden können und einem geringeren Gehalt an bindenden Fasern aus einem thermoplastischen synthetischen Material, wobei die bindenden Fasern an den Trägerfasern festsitzen, dadurch gekennzeichnet, daß das Formteil aus einer Mischung hergestellt ist, welche die Tägerfasern in Form eines losen, granulierten (nodulated) Fasermateriales oder Faserbündeln mit einem Durchmesser von 2–10 mm umfaßt, und wobei die bindenden Fasern eine Länge von 5–25 mm und einen Durchmesser von 10–30 Mikron aufweisen, wobei die Rohdichte des Formteiles 0,08–0,30 g/cm³ beträgt.

2. Formteil nach Anspruch 1, dadurch gekennzeichnet, daß die bindenden Fasern aus einem thermoplastischen synthetischen Material mit einer Glasübergangstemperatur von 30–180°C hergestellt sind.

3. Formteil nach Anspruch 2, dadurch gekennzeichnet, daß die Glasübergangstemperatur des thermoplastischen synthetischen Materiales weniger als ungefähr 70°C beträgt.

4. Formteil nach Anspruch 3, dadurch gekennzeichnet, daß das thermoplastische synthetische Material ein Copolymer aus etwa 80–90% Vinylchlorid und 10–20% Vinylacetat ist.

5. Verfahren zur Herstellung eines Formteiles nach den Ansprüchen 1–4, welches die folgenden Schritte umfaßt: Herstellen einer Mischung mit einem hauptsächlichen Gehalt an Trägerfasern, die nicht durch Druck oder Wärme geformt werden können und einem geringeren Gehalt an bindenden Fasern aus einem thermoplastischen synthetischen Material und dann die Mischung in Trockenform einer Formungsbehandlung unterworfen wird, dadurchgekennzeichnet, daß eine lose Mischung mit einer Rohdichte von 0,05–0,15 g/cm³ aus zusammenhanglosen Agglomeraten von Trägerfasern hergestellt wird, wobei die Agglomerate einen Durchmesser von 2–10 mm aufweisen, und die losen bindenden Fasern, welche aus einem thermoplastischen synthetischen Material hergestellt werden, eine Faserlänge von 5–25 mm und einen Durchmesser von 10–30 Mikron aufweisen, die Mischung dann der Formungsbehandlung unterworfen wird durch Gießen der trockenen Mischung in eine Form, Rütteln derselben und Erwärmen derselben auf eine Temperatur oberhalb der Glasübergangstemperatur des thermoplastischen synthetischen Materials und Anwenden eines leichten Druckes, welcher nicht zu einer Rohdichte von mehr als 0,08–0,30 g/cm³ führt, wonach die Mischung auf eine Temperatur unterhalb der Glasübergangstemperatur gekühlt wird und das Formteil aus der Form genommen wird.

6. Verfahren nach Anspruch 5, dadurch gekennzeichnet, daß das thermoplastische synthetische Material eine Glasübergangstemperatur von etwa 70°C aufweist.

7. Verfahren nach Anspruch 6, dadurch gekennzeichnet, daß das thermoplastische synthetische Material ein Copolymer aus etwa 80–90% Vinylchlorid und 10–20% Vinylacetat ist.

8. Verfahren nach den Ansprüchen 5–7, dadurch gekennzeichnet, daß die Mischung durch Verarbeiten der beiden Faserkomponenten zu einer wäßrigen Suspension mit einem Feststoffgehalt von 2–10% hergestellt wird und daß die Mischung nach Rückgewinnung aus der Suspension zunächst für ein weiteres Verarbeiten getrocknet wird.

9. Verfahren nach den Ansprüchen 5–6, dadurch gekennzeichnet, daß beide Faserkomponenten im trockenen Zustand in eine langsam rotierende Mischung unter Verwendung von Mineralwolle in granulierter (nodulated) Form als Trägerfaser-Material gemischt werden.

10. Verfahren nach Anspruch 9, dadurch gekennzeichnet, daß die bindenden Fasern aus dem thermoplastischen synthetischen Material, vor dem Mischen, mit Wasser in einer Menge von 10–15 Gew.-%, ggf. in Verbindung mit einem Netzmittel, benetzt werden.

11. Verfahren nach den Ansprüchen 5–7, dadurch gekennzeichnet, daß im Falle einer Verwendung von Fasern aus dem Vinylchlorid/Vinylacetat-Copolymer als bindende Fasern in der Mischung, die Fasern für 0,5–1 min. auf einer Temperatur von 80–100°C gehalten werden, die Mischung dann in einer Form durch Anlegen eines leichten Drucks geformt und gekühlt wird und das Formteil aus der Form genommen wird.